# EUROPÄISCHE PATENTANMELDUNG

(11) **EP 4 687 245 A1**
(43) Veröffentlichungstag der Anmeldung: **04.02.2026**
(21) Anmeldenummer: 24192231.9
(22) Anmeldetag: 01.08.2024
(51) Int. Cl.: H02H 11/00, H02H 7/00, H02H 3/02

(54) **VERBESSERTE VERPOLSCHUTZSCHALTUNG**

(71) Anmelder: Siemens Aktiengesellschaft, 80333 München (DE)
(72) Erfinder: Wittkowski, Michael, 48291 Telgte (DE); Buhr, Otto, 30880 Laatzen (DE); Krause, Uwe, 30982 Pattensen (DE)
(74) Vertreter: Siemens Patent Attorneys

(57) **Zusammenfassung**

Eine elektrische Last (1) soll über zwei Anschlüsse (2, 3) mit einer elektrischen Gleichspannung (U) versorgt werden. Die beiden Anschlüsse (2, 3) sind über eine Diodenanordnung (6) miteinander verbunden, die einen Stromfluss über die Diodenanordnung (6) in einer Durchlassrichtung der Diodenanordnung (6) ermöglicht, während sie einen Stromfluss über die Diodenanordnung (6) in einer Sperrrichtung der Diodenanordnung (6) verhindert. Eine Schutzschaltung (11) weist eine Harvesterschaltung (8) und eine Schalteranordnung (9) auf. Die Schalteranordnung (9) ist der Diodenanordnung (6) parallelgeschaltet. Die Harvesterschaltung (8) ist an die Diodenanordnung (6) angekoppelt und nimmt immer dann, wenn ein Stromfluss über die Diodenanordnung (6) auftritt, Energie auf und speichert sie als elektrische Energie. Die Harvesterschaltung (8) steuert immer dann, wenn die gespeicherte elektrische Energie ein oberes Speicherniveau (N1) erreicht, die Schalteranordnung (9) an, so dass die Schalteranordnung (9) die Diodenanordnung (6) niederohmig überbrückt. Immer dann, wenn die gespeicherte elektrische Energie auf ein unteres Speicherniveau (N2) unterhalb des oberen Speicherniveaus (N1) abfällt, steuert die Harvesterschaltung (8) die Schalteranordnung (9) derart an, dass die Schalteranordnung (9) die Diodenanordnung (6) nicht mehr niederohmig überbrückt.

## Beschreibung

Die vorliegende Erfindung geht aus von einer Schutzschaltung für eine elektrische Last, die über zwei Anschlüsse mit einer elektrischen Gleichspannung versorgt werden soll, wobei die beiden Anschlüsse über eine Diodenanordnung miteinander verbunden sind, die einen Stromfluss über die Diodenanordnung in einer Durchlassrichtung der Diodenanordnung ermöglicht, während sie einen Stromfluss über die Diodenanordnung in einer Sperrrichtung der Diodenanordnung verhindert. Die Sperrrichtung ist - selbstverständlich - entgegengesetzt zur Durchlassrichtung.

Es kann sich bei der Diodenanordnung um eine eigenständige, eigens zu diesem Zweck vorhandene Diode bzw. Diodenanordnung handeln. Es kann sich aber auch um eine Diodenanordnung handeln, die Bestandteil einer anderen Einrichtung ist und sich sozusagen nebenbei mit ergibt. Beispielsweise kann die Diodenanordnung als Bestandteil einer Halbbrückenschaltung realisiert sein, die in Serie geschaltete Schaltelementen enthält, denen jeweils eine Diode parallelgeschaltet ist. Dies gilt gleichermaßen im Stand der Technik als auch im Rahmen der vorliegenden Erfindung.

Eine derartige Verpolschutzschaltung ist allgemein bekannt. Rein beispielhaft kann auf den Eintrag "Verpolungsschutz" in der deutschen Wikipedia, abgerufen am 24.06.2024, verwiesen werden.

Die Schutzschaltung des Standes der Technik funktioniert vom Ansatz her einwandfrei. Es kann jedoch der Fall auftreten, dass im Falle eines "falschen" Anschlusses der elektrischen Gleichspannung an die Anschlüsse der auftretende Strom von einer die Anschlüsse mit elektrischer Energie versorgenden Gleichspannungsquelle begrenzt wird. Dadurch kann es geschehen, dass der auftretende Strom auf einen Wert begrenzt wird, bei dem eine Sicherung noch nicht auslöst. In diesem Fall fließt über die Diodenanordnung für längere Zeit ein hoher Strom und bewirkt dort eine entsprechende Verlustleistung mit allen zugehörigen negativen Auswirkungen. Die Verlustleistung kann im Bereich von etlichen Watt liegen. Wenn beispielsweise die Durchlassspannung 1 V beträgt und der Strom von der Spannungsquelle auf 50 A begrenzt wird, so ergibt sich eine Verlustleistung von 50 W.

Die Aufgabe der vorliegenden Erfindung besteht darin, Möglichkeiten zu schaffen, mittels derer die Verlustleistung auch in dem Fall reduziert werden kann, in dem eine Sicherung, welche den Stromfluss völlig unterbrechen würde, noch nicht anspricht.

Die Aufgabe wird durch eine Schutzschaltung mit den Merkmalen des Anspruchs 1 gelöst. Vorteilhafte Ausgestaltungen der Schutzschaltung sind Gegenstand der abhängigen Ansprüche 2 bis 9.

Erfindungsgemäß wird eine Schutzschaltung der eingangs genannten Art dadurch ausgestaltet,
- dass die Schutzschaltung eine Harvesterschaltung und eine Schalteranordnung aufweist,
- dass die Schalteranordnung der Diodenanordnung parallelgeschaltet ist,
- dass die Harvesterschaltung an die Diodenanordnung angekoppelt ist und immer dann, wenn ein Stromfluss über die Diodenanordnung auftritt, Energie aufnimmt und als elektrische Energie speichert,
- dass die Harvesterschaltung immer dann, wenn die gespeicherte elektrische Energie ein oberes Speicherniveau erreicht, die Schalteranordnung ansteuert, so dass die Schalteranordnung die Diodenanordnung niederohmig überbrückt, und
- dass die Harvesterschaltung immer dann, wenn die gespeicherte elektrische Energie auf ein unteres Speicherniveau unterhalb des oberen Speicherniveaus abfällt, die Schalteranordnung ansteuert, so dass die Schalteranordnung die Diodenanordnung nicht mehr niederohmig überbrückt.

Dadurch fließt während des Zeitraums, während dessen die Schalteranordnung die Diodenanordnung überbrückt, zwar weiterhin der hohe Strom. Über der Schalteranordnung fällt aber nicht mehr die Durchlassspannung der Diodenanordnung ab, sondern ein erheblich niedrigerer Wert von beispielsweise nur 10 % der Durchlassspannung. Aufgrund der deutlich niedrigeren Spannung verringert sich auch die anfallende Verlustleistung entsprechend. Bei geeigneter Wahl der Harvesterschaltung und der Schalteranordnung kann weiterhin ohne weiteres erreicht werden, dass die Zeitspanne, während derer die Schalteranordnung die Diodenanordnung niederohmig überbrückt, erheblich größer ist als die Zeitspanne, während derer die Schalteranordnung die Diodenanordnung nicht niederohmig überbrückt.

Energy Harvesting ist als solches bekannt. Insbesondere bezeichnet man als Energy Harvesting Gewinnung kleiner Mengen elektrischer Energie aus "sowieso" vorhandenen Quellen wie beispielsweise der Umgebungstemperatur, auftretenden Vibrationen oder Luftströmungen für mobile Geräte mit geringer Leistung. Die dafür eingesetzten Strukturen werden manchmal auch als Nanogenerator bezeichnet. Es kann auf die einschlägigen Einträge für "Energy Harvesting" in der deutschen und der englischen Wikipedia, abgerufen am 01.07.2024, verwiesen werden.

Vorzugsweise weist die Schalteranordnung spannungsgesteuerte Schaltelemente auf. Spannungsgesteuerte Schaltelemente weisen den Vorteil auf, dass sie außer zum Schalten selbst kaum elektrische Leistung benötigen.

Es ist möglich, dass die spannungsgesteuerten Schaltelemente als IGBTs oder dergleichen ausgebildet sind. Vorzugsweise aber sind die spannungsgesteuerten Schaltelemente als Feldeffekttransistoren ausgebildet.

Die Art der Feldeffekttransistoren kann nach Bedarf sein. Vorzugsweise sind die Feldeffekttransistoren MOSFETs.

Es ist möglich, dass die Harvesterschaltung ausschließlich thermisch an die Diodenanordnung angekoppelt ist, die Energie als thermische Energie aufnimmt und die thermische Energie in elektrische Energie wandelt. Beispielsweise kann eine derartige thermische Ankopplung der Harvesterschaltung über ein sogenanntes Peltierelement realisiert sein. Eine rein thermische Ankopplung an die Diodenanordnung weist den Vorteil auf, dass ein etwaiger Stromfluss durch die Harvesterschaltung, der bei einem ordnungsgemäßen Verbinden der Gleichspannung mit den Anschlüssen auftreten könnte, nicht berücksichtigt werden muss.

Alternativ ist es möglich, dass die Harvesterschaltung elektrisch an die Diodenanordnung angekoppelt ist und die Energie direkt als elektrische Energie aufnimmt. In diesem Fall ist die Harvesterschaltung der Diodenanordnung elektrisch parallelgeschaltet. Diese Ausgestaltung weist Vorteile bei der Energieeffizienz auf.

Im Falle der elektrischen Ankopplung der Harvesterschaltung an die Diodenanordnung ist der Harvesterschaltung vorzugsweise eine Schutzeinrichtung zugeordnet, welche die Harvesterschaltung mit mindestens einem der beiden Anschlüsse hochohmig verbindet, wenn die Diodenanordnung den Stromfluss in der Sperrrichtung verhindert, und mit beiden Anschlüssen niederohmig verbindet, wenn die Diodenanordnung den Stromfluss in der Durchlassrichtung ermöglicht. Diese Ausgestaltung schützt die Harvesterschaltung bei einem ordnungsgemäßen Verbinden der Gleichspannung mit den Anschlüssen.

Vorzugsweise umfasst die Schutzeinrichtung eine Diode und einen der Diode parallelgeschalteten Schalter, wobei der Schalter von der Harvesterschaltung gesteuert wird. Dadurch kann bei einem falschen Verbinden der Gleichspannung mit den Anschlüssen das Ausmaß an Energie, das von der Harvesterschaltung "geerntet" werden kann, maximiert werden.

Vorzugsweise nimmt die Harvesterschaltung die aufgenommene Energie direkt als elektrische Energie auf einem unteren Spannungsniveau auf oder wandelt die aufgenommene Energie zu elektrischer Energie auf dem unteren Spannungsniveau. Weiterhin umfasst die Harvesterschaltung vorzugsweise eine Stelleinrichtung, welche die elektrische Energie von dem unteren Spannungsniveau auf ein oberes Spannungsniveau umsetzt, das höher als das untere Spannungsniveau ist. Schließlich speichert die Harvesterschaltung vorzugsweise die gespeicherte elektrische Energie auf dem oberen Spannungsniveau. Diese Ausgestaltung ist besonders effizient.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Blockschaltbild,
- FIG 2 und 3: Schalteranordnungen,
- FIG 4 und 5: Zeitdiagramme,
- FIG 6 und 7: Blockschaltbilder,
- FIG 8: eine Schutzeinrichtung und
- FIG 9 und 10: Blockschaltbilder.

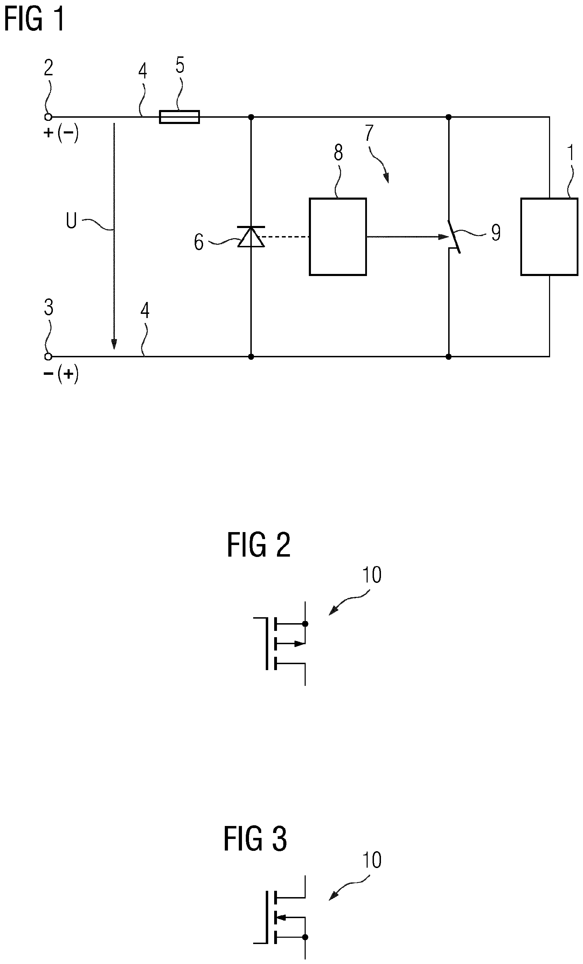

Gemäß FIG 1 soll eine elektrische Last 1 über zwei Anschlüsse 2, 3 mit einer elektrischen Gleichspannung U versorgt werden. Der Anschluss 2 soll hierbei das höhere Potenzial aufweisen und ist daher mit "+" gekennzeichnet. Demzufolge soll der Anschluss 3 das niedrigere Potenzial aufweisen und ist daher mit "-" gekennzeichnet. In den Leitungen 4 von den Anschlüssen 2, 3 zu der Last 1 ist üblicherweise eine Sicherung 5 angeordnet.

Es kann geschehen, dass die Potenziale versehentlich mit den falschen Anschlüssen 2, 3 verbunden werden, dass also der Anschluss 2 mit dem niedrigeren und der Anschluss 3 mit dem höheren Potenzial verbunden wird. Dies ist in FIG 1 dadurch angedeutet, dass bei dem Anschluss 2 zusätzlich zu dem "+" in Klammern auch ein "-" eingezeichnet ist und ebenso auch bei dem Anschluss 3 zusätzlich zu dem "-" in Klammern auch ein "+" eingezeichnet ist. Um in einem derartigen Fall die Last 1 vor der falsch gepolten Gleichspannung U zu schützen, sind die beiden Anschlüsse 2, 3 über eine Diodenanordnung 6 miteinander verbunden. Die Diodenanordnung 6 ist im einfachsten Fall als einzelne Diode ausgebildet.

Die Diodenanordnung 6 ermöglicht in einer Durchlassrichtung der Diodenanordnung 6 einen Stromfluss über die Diodenanordnung 6, während sie in einer Sperrrichtung der Diodenanordnung 6 einen Stromfluss über die Diodenanordnung 6 verhindert. Die Durchlassrichtung ist vorliegend vom Anschluss 3 zum Anschluss 2 gerichtet, die Sperrrichtung vom Anschluss 2 zum Anschluss 3. Wenn die Potenziale ordnungsgemäß mit den Anschlüssen 2, 3 verbunden sind, verhindert die Diodenanordnung 6 daher einen Stromfluss, so dass über der Diodenanordnung 6 die Gleichspannung U abfällt und die Last mit der Gleichspannung U versorgt wird. Wenn die Potenziale hingegen falsch mit den Anschlüssen 2, 3 verbunden sind, ermöglicht die Diodenanordnung 6 einen Stromfluss, so dass über der Diodenanordnung 6 nur die Durchlassspannung der Diodenanordnung 6 abfällt. Die Durchlassspannung liegt üblicherweise im Bereich von ca. 1 V. Demzufolge fließt über die Diodenanordnung 6 ein hoher Strom.

In vielen Fällen wird der Strom so hoch sein, dass die Sicherung 5 auslöst und somit einen Stromfluss völlig unterbindet. In anderen Fällen wird durch eine Spannungsquelle (nicht dargestellt), welche die Gleichspannung U zur Verfügung stellt, der Strom begrenzt. In derartigen Fällen kann es geschehen, dass der Strom zwar einerseits hoch ist, aber andererseits nicht so hoch ist, dass die Sicherung 5 auslöst oder zumindest nicht sofort auslöst. In diesem Fall fällt an der Diodenanordnung 6 dauerhaft oder zumindest für eine längere Zeit eine relativ hohe Verlustleistung an.

Zur Reduzierung dieser Verlustleistung ist zusätzlich eine Schutzschaltung 7 vorhanden. Die Schutzschaltung 7 weist eine Harvesterschaltung 8 und eine Schalteranordnung 9 auf. Die Schalteranordnung 9 ist der Diodenanordnung 6 parallelgeschaltet. Die Schalteranordnung 9 weist gemäß den FIG 2 und 3 spannungsgesteuerte Schaltelemente 10 auf. Die FIG 2 und 3 zeigt hierbei die besonders bevorzugte Ausgestaltung, gemäß der die spannungsgesteuerten Schaltelemente 10 Feldeffekttransistoren sind, konkret MOSFETs. Die Anzahl an Schaltelementen 10 kann nach Bedarf bestimmt sein. Im Minimalfall ist entsprechend der Darstellung in den FIG 2 und 3 nur ein einziges Schaltelement 10 vorhanden. Wenn mehrere Schaltelemente 10 vorhanden sind, sind diese in der Regel parallelgeschaltet.

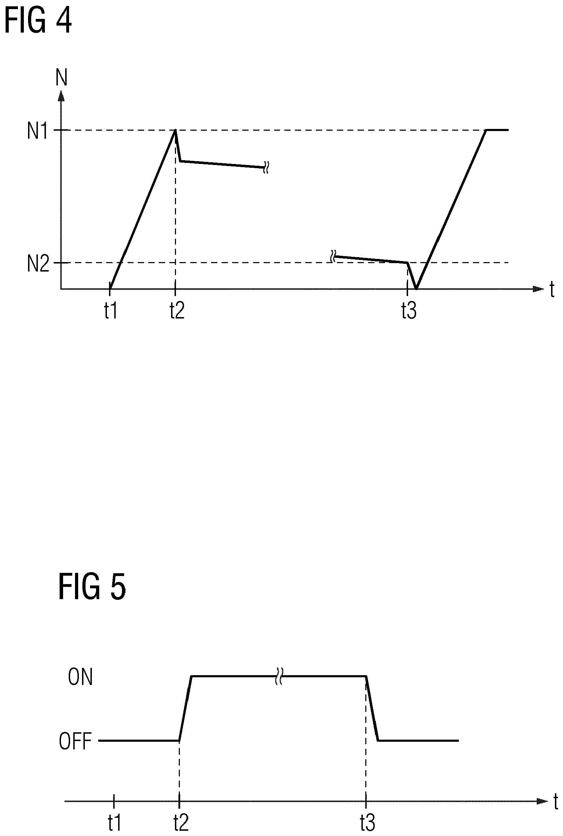

Die Harvesterschaltung 8 ist an die Diodenanordnung 6 angekoppelt. Die Harvesterschaltung 8 nimmt immer dann, wenn ein Stromfluss über die Diodenanordnung 6 auftritt, Energie auf und speichert sie als elektrische Energie. FIG 4 zeigt den Verlauf eines Niveaus N der gespeicherten elektrischen Energie als Funktion der Zeit t. Im Rahmen von FIG 4 und auch von FIG 5 wird stets vorausgesetzt, dass die Potenziale "falsch" mit den Anschlüssen 2, 3 verbunden sind.

Das - falsche - Anschalten der Gleichspannung U beginnt gemäß FIG 4 zu einem Zeitpunkt t1. Ab diesem Zeitpunkt steigt das Niveau N an, bis das Niveau N zu einem Zeitpunkt t2 ein oberes Energieniveau N1 erreicht. Das Erreichen des oberen Energieniveaus bewirkt, dass die Harvesterschaltung 8 die Schalteranordnung 9 ansteuert, so dass die Schalteranordnung 9 die Diodenanordnung 6 niederohmig überbrückt. Die Schalteranordnung 9 wechselt daher gemäß FIG 5 zum Zeitpunkt t2 vom ausgeschalteten Zustand in den eingeschalteten Zustand. Der Wechsel vom ausgeschalteten Zustand in den eingeschalteten Zustand ist in FIG 5 derart eingezeichnet, dass er eine bestimmte Zeitspanne benötigt. Die Zeitspanne ist in der Praxis jedoch sehr klein und praktisch vernachlässigbar. Der transiente Zustand der Schalteranordnung 9, während derer in der Schalteranordnung 9 Verlustleistung anfällt, ist also nur sehr kurz. Das schnelle Erreichen des vollständig durchgeschalteten Zustands kann beispielsweise dadurch erreicht werden, dass das Schaltsignal zum Ansteuern der Schalteranordnung 9 geeignet gewählt wird, beispielsweise bei +10 V liegt. Das Ansteuern der Schalteranordnung 9 benötigt jedoch eine bestimmte Energie. Das Niveau N sinkt daher unmittelbar nach dem Zeitpunkt t2 etwas ab.

Durch das Überbrücken der Diodenanordnung 6 wird die abfallende Spannung nunmehr durch die Schalteranordnung 9 bestimmt. Die abfallende Spannung kann erheblich geringer sein als die Durchlassspannung der Diodenanordnung 6. Sie kann beispielsweise bei 100 mV und in manchen Fällen sogar noch darunter liegen. Entsprechend sinkt die Verlustleistung, da der Strom zwar weiterhin groß ist, aber gegenüber dem vorherigen Zustand nicht ansteigt.

Es ist möglich, dass das Halten der Schalteranordnung 9 im eingeschalteten Zustand nur sehr wenig Energie benötigt (im Idealfall gar keine Energie). Nach dem Schalten der Schalteranordnung 9 sinkt das Niveau N daher nur sehr, sehr langsam weiter ab. Gegebenenfalls ist es sogar möglich, dass die verbleibende Energiemenge, welche die Harvesterschaltung 8 im durchgeschalteten Zustand der Schalteranordnung 9 ernten kann, den Energieverlust kontinuierlich ausgleichen kann.

Nachfolgend wird angenommen, dass das Niveau N zu einem Zeitpunkt t3 auf ein unteres Energieniveau N2 abgefallen ist, das unterhalb des oberen Energieniveaus N1 liegt. Das Abfallen auf das untere Energieniveau N2 bewirkt, dass die Harvesterschaltung 8 die Schalteranordnung 9 erneut ansteuert, aber diesmal derart, dass die Schalteranordnung 9 gemäß FIG 5 die Diodenanordnung 6 nicht mehr niederohmig überbrückt. Die Schalteranordnung 9 wechselt daher gemäß FIG 5 zum Zeitpunkt t3 vom eingeschalteten Zustand in den ausgeschalteten Zustand. Der Wechsel vom eingeschalteten Zustand in den ausgeschalteten Zustand ist in FIG 5 derart eingezeichnet, dass er eine bestimmte Zeitspanne benötigt. Die Zeitspanne ist in der Praxis jedoch sehr klein und praktisch vernachlässigbar. Der transiente Zustand der Schalteranordnung 9, während derer in der Schalteranordnung 9 Verlustleistung anfällt, ist also wieder nur sehr kurz. Das schnelle Erreichen des vollständig gesperrten Zustands kann beispielsweise dadurch erreicht werden, dass das Schaltsignal zum Ansteuern der Schalteranordnung 9 geeignet gewählt wird, beispielsweise bei 0 V liegt.

Das Ansteuern der Schalteranordnung 9 benötigt jedoch wie zuvor eine bestimmte Energie. Das Niveau N sinkt daher unmittelbar nach dem Zeitpunkt t3 etwas ab. Das untere Energieniveau N2 muss daher derart bestimmt sein, dass die Harvesterschaltung 8 diese Schaltenergie noch zur Verfügung stellen kann.

Ab dem Zeitpunkt t3 beginnt der vorstehend erläuterte Zyklus erneut. Denn über der Diodenanordnung 6 fällt nunmehr erneut die Durchlassspannung ab. Dadurch kann die Harvesterschaltung 8 erneut Energie "ernten", bis das Niveau N wieder das obere Energieniveau N1 erreicht.

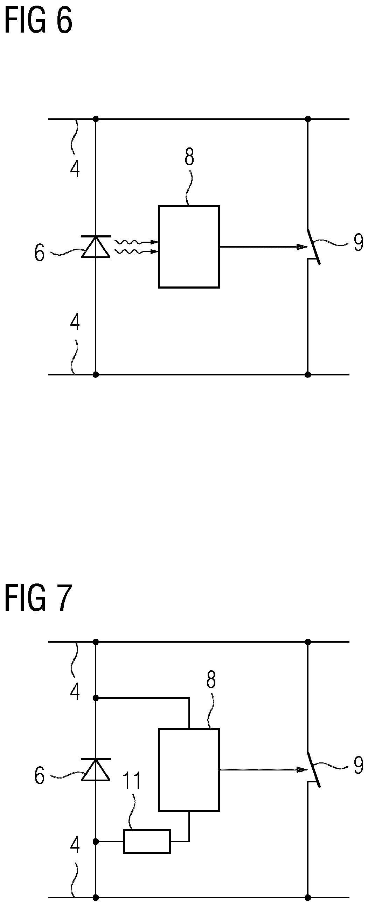

Gemäß FIG 6 ist es möglich, dass die Harvesterschaltung 8 ausschließlich thermisch an die Diodenanordnung 6 angekoppelt ist. In diesem Fall nimmt die Harvesterschaltung 8 die Energie als thermische Energie auf und wandelt die thermische Energie in elektrische Energie. Beispielsweise kann die Harvesterschaltung 8 für das Aufnehmen der thermischen Energie ein Peltierelement aufweisen, das thermisch an die Diodenanordnung 6 angekoppelt ist. Eine Verbindung der Harvesterschaltung 8 mit einer der Leitungen 4 kann dennoch gegeben sein, um die Harvesterschaltung 8 auf ein definiertes Potenzial zu legen. Alternativ wäre eine Ansteuerung der Schalteranordnung 9 beispielsweise über einen Optokoppler möglich.

Gemäß FIG 7 ist es - alternativ zu der Ausgestaltung von FIG 6 - möglich, dass die Harvesterschaltung 8 elektrisch an die Diodenanordnung 6 angekoppelt ist. In diesem Fall ist die Harvesterschaltung 8 der Diodenanordnung 6 elektrisch parallelgeschaltet und nimmt die Energie direkt als elektrische Energie auf.

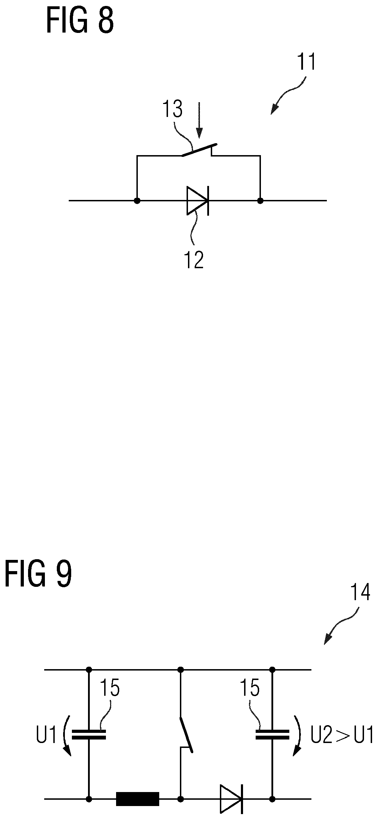

Im Falle der elektrischen Ankopplung an die Diodenanordnung 6 ist der Harvesterschaltung 8 vorzugsweise eine Schutzeinrichtung 11 zugeordnet. Die Schutzeinrichtung 11 verbindet die Harvesterschaltung 8 mit mindestens einem der beiden Anschlüsse 2, 3 hochohmig, wenn die Diodenanordnung 6 den Stromfluss in der Sperrrichtung verhindert, die Gleichspannung U also ordnungsgemäß an die Anschlüsse 2, 3 angelegt ist. Hingegen verbindet die Schutzeinrichtung 11 die Harvesterschaltung 8 mit beiden Anschlüssen 2, 3 niederohmig, wenn die Diodenanordnung 6 den Stromfluss in der Durchlassrichtung ermöglicht, die Gleichspannung U also falsch an die Anschlüsse 2, 3 angelegt ist. Die Schutzeinrichtung kann gemäß FIG 8 beispielsweise eine Diode 12 und einen der Diode 12 parallelgeschalteten Schalter 13 umfassen. In diesem Fall wird der Schalter 13 von der Harvesterschaltung 8 gesteuert wird. Der Schalter 13 ist vorzugsweise analog zu den Schaltelementen 10 ausgebildet.

Gemäß FIG 9 umfasst die Harvesterschaltung 8 eine Stelleinrichtung 14. Die Stelleinrichtung 14 setzt elektrische Energie von einem unteren Spannungsniveau U1 auf ein oberes Spannungsniveau U2 um, das höher als das untere Spannungsniveau U1 ist. Die Stelleinrichtung 14 arbeitet somit als Hochsetzsteller. Das obere Spannungsniveau U2 ist dasjenige Spannungsniveau, auf dem die Harvesterschaltung 8 die gespeicherte elektrische Energie speichert. Das untere Spannungsniveau U1 ist das Spannungsniveau, bei dem die Harvesterschaltung 8 im Falle der Ausgestaltung von FIG 7 die aufgenommene Energie direkt aufnimmt. Im Falle der Ausgestaltung von FIG 6 handelt es sich bei dem unteren Spannungsniveau U1 um das Spannungsniveau, das die Harvesterschaltung 8 bei der Wandlung der aufgenommenen Energie zu elektrischer Energie generiert. Gleiches gilt für andere Sachverhalte, bei denen die Harvesterschaltung 8 aufgenommene Energie in elektrische Energie wandelt.

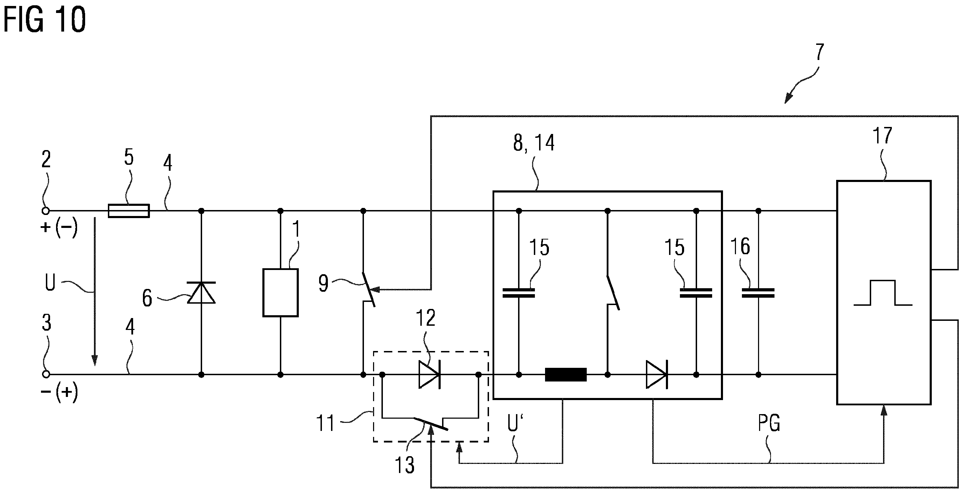

FIG 10 zeigt eine Ausgestaltung der Schaltungsanordnung von FIG 1, bei welcher die Harvesterschaltung 8 gemäß der Darstellung von FIG 7 elektrisch an die Diodenanordnung 6 angekoppelt ist und die Schutzeinrichtung 11 von FIG 8 und die Stelleinrichtung 14 von FIG 9 aufweist. Gemäß FIG 10 ist zusätzlich zu Kondensatoren 15 der Stelleinrichtung 14 ein weiterer Speicherkondensator 16 vorhanden. Weiterhin ist ein Pulsgenerator 17 vorhanden, der die Schaltsignale für die Schalteranordnung 9 und den Schalter 13 generiert. Weiterhin generiert die Harvesterschaltung 8 zusätzlich auch eine Hilfsspannung U', sofern eine derartige Hilfsspannung U' für die Ansteuerung des Schalters 13 benötigt wird. Schließlich generiert die Harvesterschaltung 8 ein sogenanntes "Power good"-Signal, das dem Pulsgenerator 17 zugeführt wird, so dass der Pulsgenerator 17 zu den richtigen Zeitpunkten t2 und t3 die entsprechenden Schaltsignale generieren kann.

Der weitere Aufbau der Harvesterschaltung 8 kann konventioneller Natur sein. Insbesondere sind sogar integrierte Schaltkreise bekannt, welche geeignete Harvesterschaltungen 8 umfassen.

Die vorliegende Erfindung weist viele Vorteile auf. Insbesondere kann die Verlustleistung im Falle eines "falschen" Anschließens der Gleichspannung U deutlich reduziert werden. Damit kann auch bei Verpolung bei Strömen, welche ein Sicherungselement nicht auslösen, ein Schaden verhindert werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Schutzschaltung für eine elektrische Last (1), die über zwei Anschlüsse (2, 3) mit einer elektrischen Gleichspannung (U) versorgt werden soll, wobei die beiden Anschlüsse (2, 3) über eine Diodenanordnung (6) miteinander verbunden sind, die einen Stromfluss über die Diodenanordnung (6) in einer Durchlassrichtung der Diodenanordnung (6) ermöglicht, während sie einen Stromfluss über die Diodenanordnung (6) in einer Sperrrichtung der Diodenanordnung (6) verhindert,
- wobei die Schutzschaltung eine Harvesterschaltung (8) und eine Schalteranordnung (9) aufweist,
- wobei die Schalteranordnung (9) der Diodenanordnung (6) parallelgeschaltet ist,
- wobei die Harvesterschaltung (8) an die Diodenanordnung (6) angekoppelt ist und immer dann, wenn ein Stromfluss über die Diodenanordnung (6) auftritt, Energie aufnimmt und als elektrische Energie speichert,
- wobei die Harvesterschaltung (8) immer dann, wenn die gespeicherte elektrische Energie ein oberes Speicherniveau (N1) erreicht, die Schalteranordnung (9) ansteuert, so dass die Schalteranordnung (9) die Diodenanordnung (6) niederohmig überbrückt, und
- wobei die Harvesterschaltung (8) immer dann, wenn die gespeicherte elektrische Energie auf ein unteres Speicherniveau (N2) unterhalb des oberen Speicherniveaus (N1) abfällt, die Schalteranordnung (9) ansteuert, so dass die Schalteranordnung (9) die Diodenanordnung (6) nicht mehr niederohmig überbrückt.

2. Schutzschaltung nach Anspruch 1,
**dadurch gekennzeichnet,**
**dass** die Schalteranordnung (9) spannungsgesteuerte Schaltelemente (10) aufweist.

3. Schutzschaltung nach Anspruch 2,
**dadurch gekennzeichnet,**
**dass** die spannungsgesteuerten Schaltelemente (10) Feldeffekttransistoren sind.

4. Schutzschaltung nach Anspruch 3,
**dadurch gekennzeichnet,**
**dass** die Feldeffekttransistoren MOSFETs sind.

5. Schutzschaltung nach einem der Ansprüche 1 bis 4,
**dadurch gekennzeichnet,**
**dass** die Harvesterschaltung (8) ausschließlich thermisch an die Diodenanordnung (6) angekoppelt ist, die Energie als thermische Energie aufnimmt und die thermische Energie in elektrische Energie wandelt.

6. Schutzschaltung nach einem der Ansprüche 1 bis 4,
**dadurch gekennzeichnet,**
**dass** die Harvesterschaltung (8) elektrisch an die Diodenanordnung (6) angekoppelt ist und die Energie direkt als elektrische Energie aufnimmt.

7. Schutzschaltung nach Anspruch 6,
**dadurch gekennzeichnet,**
**dass** der Harvesterschaltung (8) eine Schutzeinrichtung (11) zugeordnet ist, welche die Harvesterschaltung (8) mit mindestens einem der beiden Anschlüsse (2, 3) hochohmig verbindet, wenn die Diodenanordnung (6) den Stromfluss in der Sperrrichtung verhindert, und mit beiden Anschlüssen (2, 3) niederohmig verbindet, wenn die Diodenanordnung (6) den Stromfluss in der Durchlassrichtung ermöglicht.

8. Schutzschaltung nach Anspruch 7,
**dadurch gekennzeichnet,**
**dass** die Schutzeinrichtung (11) eine Diode (12) und einen der Diode (12) parallelgeschalteten Schalter (13) umfasst und dass der Schalter (13) von der Harvesterschaltung (8) gesteuert wird.

9. Schutzschaltung nach einem der obigen Ansprüche,
**dadurch gekennzeichnet,**
**dass** die Harvesterschaltung (8) die aufgenommene Energie direkt als elektrische Energie auf einem unteren Spannungsniveau (U1) aufnimmt oder die aufgenommene Energie zu elektrischer Energie auf dem unteren Spannungsniveau (U1) wandelt, dass die Harvesterschaltung (8) eine Stelleinrichtung (14) umfasst, welche die elektrische Energie von dem unteren Spannungsniveau (U1) auf ein oberes Spannungsniveau (U2) umsetzt, das höher als das untere Spannungsniveau (U1) ist, und dass die Harvesterschaltung (8) die gespeicherte elektrische Energie auf dem oberen Spannungsniveau (U2) speichert.
